(19) **Europäisches Patentamt / European Patent Office / Office européen des brevets**

(11) **EP 3 770 636 A1**

(12) # EUROPEAN PATENT APPLICATION
published in accordance with Art. 153(4) EPC

(43) Date of publication:
**27.01.2021 Bulletin 2021/04**

(21) Application number: **19787948.9**

(22) Date of filing: **05.03.2019**

(51) Int Cl.:
***G01S 17/06*** (2006.01)

(86) International application number:
**PCT/CN2019/077020**

(87) International publication number:
**WO 2019/201022 (24.10.2019 Gazette 2019/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.04.2018 CN 201810346872**

(71) Applicant: **Guangzhou Coayu Robot Co., Ltd.**
**Guangzhou, Guangdong 510000 (CN)**

(72) Inventors:
• **WANG, Xingzhi**
  **Shenzhen, Guangdong 518000 (CN)**
• **DING, Huang**
  **Shenzhen, Guangdong 518000 (CN)**
• **WANG, Lilei**
  **Shenzhen, Guangdong 518000 (CN)**
• **ZHENG, Zhuobin**
  **Shenzhen, Guangdong 518000 (CN)**

(74) Representative: **Manitz Finsterwald**
**Patent- und Rechtsanwaltspartnerschaft mbB**
**Martin-Greif-Strasse 1**
**80336 München (DE)**

(54) **RADAR DATA COMPENSATION METHOD FOR MOBILE ROBOT, DEVICE, AND STORAGE MEDIUM**

(57) A radar data compensation method for a mobile robot, comprising: obtaining a uniform time series, the time interval between any two adjacent time points of the uniform time series being equal (201); determining, according to the timestamp of obtaining data by a position sensor and position information obtained by the position sensor, position information corresponding to the uniform time series (202); determining, according to the timestamp of obtaining data by an angle sensor and angle information obtained by the angle sensor, angle information corresponding to the uniform time series (203); determining, according to the position information and angle information corresponding to the uniform time series, position information and angle information of a mobile robot at the moment when a radar sensor obtains data points (204); and compensating, according to the position information and angle information of the mobile robot at the moment when the radar sensor obtains the data points, each radar data point corresponding to the moment when the radar sensor obtains radar data, so as to obtain motion compensation points of the radar data points corresponding to the moment when the radar data is obtained (205). Also provided are a radar data compensation apparatus for a mobile robot, a device, and a storage medium.

FIG. 2

**Description**

**CROSS-REFERENCE TO RELATED APPLICATION**

This disclosure claims priority to Chinese Patent Application No. 2018103468721, filed before Chinese Patent Office on April 18, 2018 and entitled "METHOD AND APPARATUS FOR RADAR DATA COMPENSATION OF MOBILE ROBOT, DEVICE, AND STORAGE MEDIUM", which is incorporated herein by reference in its entirety.

**TECHNICAL FIELD**

The disclosure relates to a technical field of a robot, and more particularly, to a method and an apparatus for radar data compensation of a mobile robot, and a storage medium.

**BACKGROUND**

With development of Internet technology and automation technology, robotic technology is becoming more and more mature nowadays. For example, a sweeping robot is increasingly involved in people's lives since it is simple to operate and convenient to use.

Currently, in order to locate a robot and plan a motion trajectory of the robot, an odometer and a gyroscope are provided inside the robot. The robot can acquire a position data of the robot by the odometer and an angle data of the robot by the gyroscope. A Lidar sensor may also be provided on the robot, and the position data and the angle data of the robot are determined by data acquired by the Lidar sensor. When the Lidar sensor acquires the data, if the robot is in a moving state, the Lidar sensor may be located at a different position at a moment transmitting laser point and a moment receiving laser point, such that the data finally acquired by the Lidar sensor is inaccurate. Therefore, a position data and an angle data acquired by the odometer and the gyroscope can be configured to linearly interpolate to acquire a position data and an angle data acquired at each time point of a Lidar data to correct a data of a Lidar sensor.

However, since a frequency at which the Lidar sensor acquires a radar data point is much higher than a frequency at which the odometer and the gyroscope acquire the data, the position data and angle data obtained by correcting data of the Lidar sensor with the position data and the angle data acquired by the odometer and the gyroscope has a major error, which affects accuracy of the data correction.

**SUMMARY**

In view of the above technical problem, there is a need to provide a method and an apparatus for radar data compensation of a mobile robot, a device, and a storage medium that can improve accuracy of compensation of radar sensor data.

A method for radar data compensation of a mobile robot, the method includes:

acquiring a uniform time sequence, and time intervals between any two adjacent time points of the uniform time sequence being equal;
determining position information corresponding to the uniform time sequence according to a time stamp of a position sensor acquiring data and position information acquired by the position sensor;
determining angle information corresponding to the uniform time sequence according to a time stamp of an angle sensor acquiring data and angle information acquired by the angle sensor;
determining position information and angle information of the mobile robot at a moment a radar sensor acquiring data point according to the position information and the angle information corresponding to the uniform time sequence; and
compensating each radar data point acquired by the radar sensor according to the position information and the angle information of the mobile robot at the moment the radar sensor acquiring data point to acquire a motion compensation point of each radar data point corresponding to the moment acquiring the radar data.

A apparatus for radar data compensation of a mobile robot, which includes:

an acquisition module, configured to acquire a uniform time sequence, and time intervals between any two adjacent time points of the uniform time sequence being equal;
a first determination module, configured to determine position information corresponding to the uniform time sequence according to a time stamp of a position sensor acquiring data and position information acquired by the position sensor;

a second determination module, configured to determine angle information corresponding to the uniform time sequence according to a time stamp of an angle sensor acquiring data and angle information acquired by the angle sensor;

a third determination module, configured to determine position information and angle information of the mobile robot at a moment a radar sensor acquiring data point according to the position information and the angle information corresponding to the uniform time sequence;

a compensation module, configured to compensate each radar data point corresponding to the moment the radar sensor acquiring the radar data according to the position information and the angle information of the mobile robot at the moment the radar sensor acquiring data point to acquire a motion compensation point of each radar data point corresponding to the moment acquiring radar data.

A computer device including a memory and a processor, the memory having a computer program stored thereon which, when executed by the processor, causes the processor to perform :

acquiring a uniform time sequence, and time intervals between any two adjacent time points of the uniform time sequence being equal;

determining position information corresponding to the uniform time sequence according to a time stamp of a position sensor acquiring data and position information acquired by the position sensor;

determining angle information corresponding to the uniform time sequence according to a time stamp of an angle sensor acquiring data and angle information acquired by the angle sensor;

determining position information and angle information of the mobile robot at a moment a radar sensor acquiring data point according to the position information and the angle information corresponding to the uniform time sequence; and

compensating each radar data point acquired by the radar sensor according to the position information and the angle information of the mobile robot at the moment the radar sensor acquiring data point to acquire a motion compensation point of each radar data point corresponding to the moment acquiring the radar data.

A computer-readable storage medium having a computer program stored thereon which, when executed by a processor, causes the processor to perform:

acquiring a uniform time sequence, and time intervals between any two adjacent time points of the uniform time sequence being equal;

determining position information corresponding to the uniform time sequence according to a time stamp of a position sensor acquiring data and position information acquired by the position sensor;

determining angle information corresponding to the uniform time sequence according to a time stamp of an angle sensor acquiring data and angle information acquired by the angle sensor;

determining position information and angle information of the mobile robot at a moment a radar sensor acquiring data point according to the position information and the angle information corresponding to the uniform time sequence; and

compensating each radar data point acquired by the radar sensor according to the position information and the angle information of the mobile robot at the moment the radar sensor acquiring data point to acquire a motion compensation point of each radar data point corresponding to the moment acquiring the radar data.

According to the method for radar data compensation, the device, and the storage medium of the mobile robot. It acquires a uniform time sequence, and time intervals between any two adjacent time points of the uniform time sequence being equal; determines position information corresponding to the uniform time sequence according to a time stamp of a position sensor acquiring data and position information acquired by the position sensor; determines angle information corresponding to the uniform time sequence according to a time stamp of an angle sensor acquiring data and angle information acquired by the angle sensor; determines position information and angle information of the mobile robot at a moment a radar sensor acquiring data point according to the position information and the angle information corresponding to the uniform time sequence; and compensates each radar data point acquired by the radar sensor according to the position information and the angle information of the mobile robot at the moment the radar sensor acquiring data point to acquire a motion compensation point of each radar data point corresponding to the moment acquiring the radar data. Since time intervals between any two adjacent time points of the uniform time sequence are equal, when each radar data point corresponding to the moment the radar sensor acquiring the radar data is compensated to acquire the motion compensation point of each radar data point corresponding to the moment acquiring radar data, the position sensor, the angle sensor, and the radar sensor all use a uniform time sequence, that is, sampling frequencies of the position sensor, the angle sensor, and the radar sensor are uniform, thereby reducing the error of the position data and the angle data caused by inconsistency of the sampling frequencies of the sensors, thereby improving accuracy of data correction, and further improving accuracy of compensation of data acquired by the radar sensor.

**BRIEF DESCRIPTION OF THE DRAWINGS**

FIG. 1 is an application environment diagram of a method for radar data compensation according to an embodiment;
FIG. 2 is a flowchart of a method for radar data compensation of a mobile robot provided by an embodiment of the disclosure;
FIG. 3 is a schematic diagram of time sequence of a sensor acquiring data according to an embodiment of the disclosure;
FIG. 4 is a flowchart of a possible implementation of step 202 in the embodiment shown in FIG. 2;
FIG. 5 is a flowchart of a possible implementation of step 204 in the embodiment shown in FIG. 2;
FIG. 6 is a schematic diagram of time sequence of a radar sensor acquiring data according to an embodiment of the disclosure;
FIG. 7 is a schematic diagram of a velocity vector according to an embodiment of the disclosure;
FIG. 8 is a flowchart of a possible implementation of step 205 in the embodiment shown in FIG. 2;
FIG. 9 is a schematic diagram of a motion compensation model according to an embodiment of the disclosure;
FIG. 10 is a flowchart of a possible implementation of step 802 in the embodiment shown in FIG. 8;
FIG. 11 is a block diagram of an apparatus for radar data compensation of a mobile robot according to an embodiment of the disclosure; and
FIG. 12 is a schematic diagram of an internal structural of a device according to an embodiment of the disclosure.

**DETAILED DESCRIPTION OF THE EMBODIMENTS**

In order to make objects, technical solutions and advantages of the disclosure clear, the disclosure will be described in further detail below with reference to an accompanying drawing and an embodiment. It is to be understood that a specific embodiment described herein is only illustrative of the disclosure and is not intended to limit the disclosure.

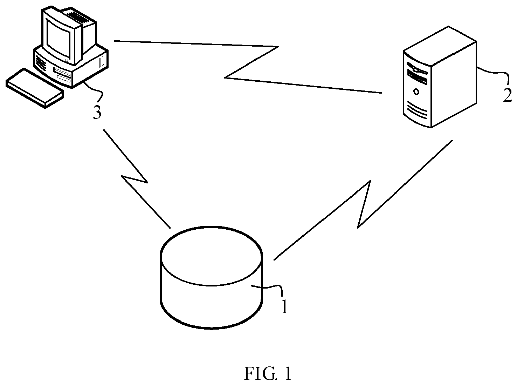

A method for radar data compensation of a mobile robot according to the disclosure can be applied to an disclosure environment shown in FIG. 1. Where a robot 1, a server 2, and a terminal 3 can communicate through a network. The terminal 3 may be, but is not limited to, a variety of personal computers, laptops, smartphones, tablets, and portable wearable devices, and the server 2 may be implemented by a separate server or a server cluster including multiple servers. For example, the robot 1 may be a floor sweeping robot on which an angle sensor, a position sensor, and a radar sensor are provided, and the radar sensor may be a laser rotation radar sensor.

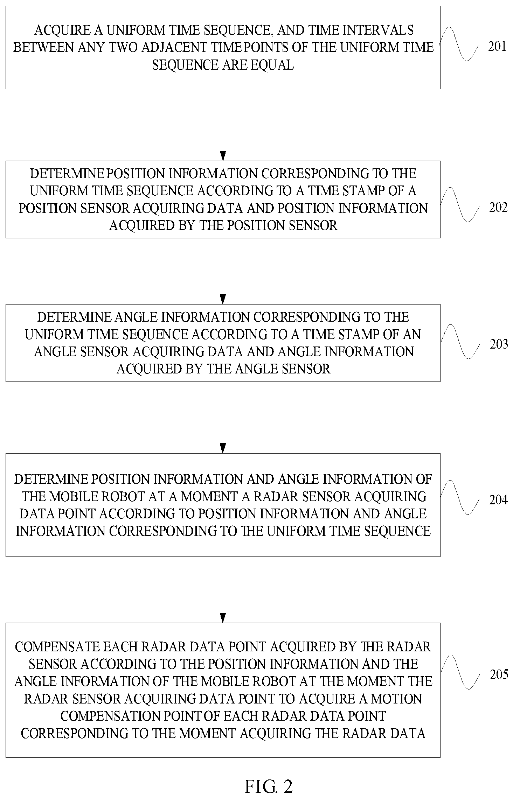

FIG. 2 is a flowchart of a method for radar data compensation of a mobile robot according to an embodiment of the disclosure. The method may be performed by any one of the robot 1, the server 2, and the terminal 3 in FIG. 1. As shown in FIG. 2, the method includes the steps of:

Step 201: acquire a uniform time sequence, and time intervals between any two adjacent time points of the uniform time sequence are equal.

In this embodiment, the uniform time sequence may be a preset time sequence, or may be a sequence acquired by real-time calculation in a radar data compensation process. For example, a time sequence in which time intervals are equal may be preset, or the uniform time sequence may be calculated according to a sampling frequency of a position sensor or an angle sensor.

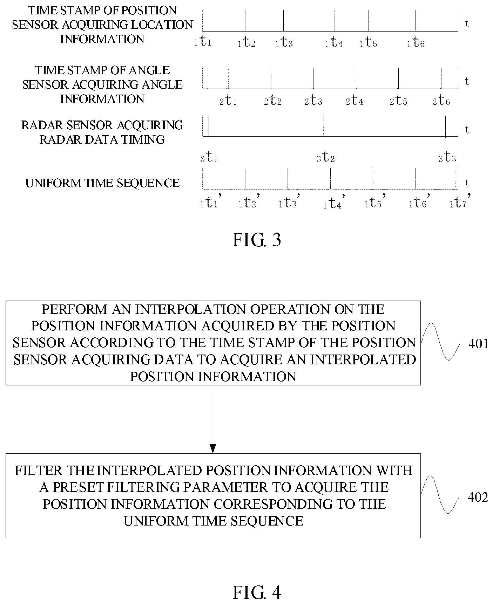

As shown in FIG. 3, a time stamp of the position sensor acquiring position information is $_1t_1, _1t_2, _1t_3, ..., _1t_n$, a time stamp of the angle sensor acquiring angle information is $_2t_1, _2t_2, _2t_3,..._2t_n$, a moment the radar sensor acquiring the radar data is $_3t_1, _3t_2, _3t_3, ..., _3t_n$, and a uniform time sequence is $_1t'_1, _1t'_2, _1t'_3,..., _1t'_n$.

Step 202: determine position information corresponding to the uniform time sequence according to a time stamp of a position sensor acquiring data and position information acquired by the position sensor.

In this embodiment, an interpolation operation may be performed according to position information acquired by the position sensor and a time stamp of the position sensor acquiring data to determine position information corresponding to the uniform time sequence. Alternatively, the position information acquired by the position sensor may be interpolated according to the time stamp of the position sensor acquiring data, and then an interpolated position information is corrected, and the corrected position data is used as the position information corresponding to the uniform time sequence.

As shown in FIG. 3, the position data acquired by the position sensor may be interpolated according to the time stamp $_1t_1, _1t_2, _1t_3, ..., _1t_n$ of the position information acquired by the position sensor to acquire the position information corresponding to the uniform time sequence $_1t'_1, _1t'_2, _1t'_3,..., _1t'_n$. Alternatively, the position information obtained by interpolation may be corrected, and the corrected position information may be used as the position information corresponding to the uniform time sequence $_1t'_1$, $_1t'_2$, $_1t'_3$,..., $_1t'_n$.

The position sensor is configured to acquire position information of the robot and locate the robot. The position sensor may be an apparatus for measuring a travel distance such as an odometer, or may be a positioning apparatus such as a Global Positioning System (GPS), and the position sensor is integrated inside the robot or provided on the robot.

Step 203: determine angle information corresponding to the uniform time sequence according to a time stamp of an angle sensor acquiring data and angle information acquired by the angle sensor.

In this embodiment, the angle information acquired by the angle sensor can be interpolated according to the time stamp of the angle sensor acquiring data to acquire the angle information corresponding to the uniform time sequence.

As shown in FIG. 3, the angle information acquired by the angle sensor may be interpolated according to the time stamp $_2t_1$, $2^t2$, $_2t_3$,..., $_2t_n$ of angle information acquired by the angle sensor to acquire the angle information corresponding to the uniform time sequence $_1t'_1$, $_1t'_2$, $_1t'_3$,..., $_1t'_n$.

The angle sensor is configured to acquire the angle information of the robot to determine a motion direction of the robot. The angle sensor may be an electronic compass or a gyroscope or the like, which is integrated inside the robot or mounted on the robot.

Step 204: determine position information and angle information of the mobile robot at a moment a radar sensor acquiring data point according to position information and angle information corresponding to the uniform time sequence.

In this embodiment, as shown in FIG. 3, the position information and the angle information corresponding to the uniform time sequence $_1t'_1$, $_1t_2$, $_1t_3$,..., $_1t'_n$ can be interpolated according to the uniform time sequence $_1t'_1$, $_1t'_2$, $_1t'_3$,..., $_1t'_n$ to acquire the position information and the angle information of the mobile robot at the moment the radar sensor acquiring data point.

Step 205: compensate each radar data point acquired by the radar sensor according to the position information and the angle information of the mobile robot at the moment the radar sensor acquiring data point to acquire a motion compensation point of each radar data point corresponding to the moment acquiring the radar data.

The moment the radar sensor acquiring the data point is a time stamp corresponding to each data point acquired by the radar sensor; the moment acquiring the radar data is a time point corresponding to each 360-degree rotation of the radar sensor.

In this embodiment, according to the position information and the angle information of the mobile robot at the moment the radar sensor acquiring data point, each radar data point corresponding to each moment the radar sensor acquiring radar data may be compensated to acquire the motion compensation point of each radar data point corresponding to the moment acquiring the radar data, or the motion compensation model may be acquired according to the position information and the angle information of the mobile robot at the moment the radar sensor acquiring data point, and the motion compensation model may be obtained according to the position information and the angle information of the mobile robot at the moment the radar sensor acquiring data point, the motion compensation model is used to compensate each radar data point corresponding to the moment the radar sensor acquiring the radar data to acquire the motion compensation point of each radar data point corresponding to the moment acquiring the radar data.

The radar sensor may be a Lidar sensor, a microwave radar sensor, a laser rotation radar sensor, or the like. The radar sensor may be provided on the robot, and is generally provided at a highest point of the robot, but is not limited hereto.

The method for radar data compensation of a mobile robot provided by an embodiment of the disclosure is to acquire a uniform time sequence; determine position information corresponding to the uniform time sequence according to the time stamp the position sensor acquiring the and the position information acquired by the position sensor; determine angle information corresponding to the uniform time sequence according to the time stamp of the angle sensor acquiring data and the angle information acquired by the angle sensor; determine the position information and the angle information of the mobile robot at the moment the radar sensor acquiring data point according to the position information and the angle information corresponding to the uniform time sequence; compensate each radar data point corresponding to the moment the radar sensor acquiring radar data according to the position information and the angle information of the mobile robot at the moment the radar sensor acquiring data point to acquire a motion compensation point of each radar data point corresponding to the moment acquiring the radar data. Since time intervals between any two adjacent time points of the uniform time sequence are equal, when each radar data point corresponding to the moment the radar sensor acquiring the radar data is compensated to acquire the motion compensation point of each radar data point corresponding to the moment acquiring radar data, the position sensor, the angle sensor, and the radar sensor all use a uniform time sequence, that is, sampling frequencies of the position sensor, the angle sensor, and the radar sensor are uniform, thereby reducing the error of the position data and the angle data caused by inconsistency of the sampling frequencies of the sensors, thereby improving accuracy of data correction, and further improving accuracy of compensation of data acquired by the radar sensor.

Optionally, on basis of above-described embodiment shown in FIG. 2, if the uniform time sequence is not a predetermined time sequence, a first time sequence may be determined according to the sampling frequency of the position sensor or the angle sensor.

Optionally, a possible implementation of step 201 acquiring the uniform time sequence includes determine a sampling time interval according to a sampling frequency of the position sensor; determine the uniform time sequence according to the sampling time interval and with a first time stamp of the position sensor acquiring data as a starting point.

In this embodiment, the uniform time sequence may be determined according to the sampling frequency of the position sensor. As shown in FIG. 3, the time stamp of the position sensor acquiring data is $_1t_1$, $_1t_2$, $_1t_3$,..., $_1t_n$, the time stamp of the angle sensor acquiring data is $2^t1$, $2^t2$, $_2t_3$, $_2t_n$, and the moment the radar sensor acquiring the radar data is $_3t_1$, $3^t2$, $_3t_3$, ...,$_3t_n$. For example, if the sampling frequency of the position sensor is 20Hz, a sampling time interval is 50ms, and the first time stamp $_1t_1$ of the position sensor acquiring data is taken as the start point, and a time point is taken every 50ms to form a uniform time sequence $_1t'_1$, $_1t'_2$, $_1t'_3$,..., $_1t'_n$.

Optionally, another possible implementation of step 201 acquiring the uniform time sequence includes determine a sampling time interval according to the sampling frequency of the angle sensor; determine a uniform time sequence according to the sampling time interval and with a first time stamp of the position sensor acquiring data as a starting point.

In this embodiment, as shown in FIG. 3, the uniform time sequence may also be determined according to the time sequence $_2t_1$, $_2t_2$, $_2t_3$,..., $_2t_n$ of the angle sensor acquiring data. For example, if the sampling frequency of the angle sensor is 10 Hz, the sampling interval is 10 ms, and the uniform time sequence $_1t'_1$, $_1t'_2$, $_2t'_3$,..., $_1t'_n$ is formed by taking one time point every 10 ms starting from the first time point $_2t_1$ of the time sequence $_2t_1$, $_2t_2$, $_2t_3$,...,$_2t_n$ the angle sensor acquiring data.

FIG. 4 is a flowchart of a possible implementation of step 202 in the embodiment shown in FIG. 2. As shown in FIG. 4, step 202 determine the position information corresponding to the uniform time sequence according to the time stamp of the position sensor acquiring data and the position information acquired by the position sensor includes:

Step 401: perform an interpolation operation on the position information acquired by the position sensor according to the time stamp of the position sensor acquiring data to acquire an interpolated position information.

In this embodiment, as shown in FIG. 3, the position information acquired by the sensor can be interpolated according to the time stamp $_1t_1$, $_1t_2$, $_1t_3$, ..., $_1t_n$ of the position sensor acquiring data to acquire the interpolated position information.

Step 402: filter the interpolated position information with a preset filtering parameter to acquire the position information corresponding to the uniform time sequence.

In this embodiment, in order to reduce the error in the linear interpolation process, some filtering parameters may be set in advance, and the interpolated position information is filtered according to the filtering parameters to acquire the position information corresponding to the uniform time sequence $_1t'_1$, $_1t'$, $_1t'_3$,..., $_1t'_n$. The filtering method may be a Kalman filter, a Wiener filter, a nonlinear filter, or the like. The Kalman filter may be a standard Kalman filter, or an algorithm such as an extended Kalman filter (EKF), a unscented Kalman filter (UKF), or a particle filter. Table 1 is a table of Kalman filtering parameters according to an embodiment of the disclosure. As shown in Table 1, the filtering parameters include a state variable X, an observation variable Z, a state matrix A, an observation matrix H, process noise Q, and measurement noise. The observation variables Z may be the position information corresponding to the uniform time sequence $_1t'_1$, $_1t'_2$, $_1t'_3$,..., $_1t'_n$.

Table 1

| Kalman filter parameters | Value | Symbol Description |
|---|---|---|
| State variable X | $$\begin{bmatrix} p_x \\ p_y \\ v_x \\ v_x \end{bmatrix}$$ | $p_x$ : position at x-axis of robot<br>$p_y$: position at y-axis of robot<br>$v_x$: velocity at x-axis of robot<br>$v_y$: velocity at y-axis of robot |
| Observation variable Z | $$\begin{bmatrix} z_x \\ z_y \end{bmatrix}$$ | $z_x$ observation at x-axis of robot<br>$z_y$ observation at y-axis of robot |

(continued)

| Kalman filter parameters | Value | Symbol Description |
|---|---|---|
| State matrix A | $\begin{bmatrix} 1 & 0 & 1 & 0 \\ 0 & 1 & 0 & 1 \\ 0 & 0 & 1 & 0 \\ 0 & 0 & 0 & 1 \end{bmatrix}$ | |
| Observation matrix H | $\begin{bmatrix} 1 & 0 & 0 & 0 \\ 0 & 1 & 0 & 0 \end{bmatrix}$ | |
| Process noise Q | $diag$(0.005 0.005 0.005 0.005) | |
| Measuring noise | $diag$(0.1 0.1) | |

In this embodiment, the position information corresponding to the uniform time sequence $_1t'_1$, $_1t'_2$, $_1t'_3$,..., $_1t'_n$ is the observation variable Z, and the position data corresponding to the uniform time sequence can be acquired by filtering the interpolated position information using the parameters in Table 1.

According to the method for radar data compensation of the mobile robot provided by an embodiment of the disclosure, according to the time stamp of the position sensor acquiring data, the position information acquired by sensor is interpolated to acquire the interpolated position information which is filtered using a preset filtering parameter to acquire the position information corresponding to the uniform time sequence. Since the interpolated position information is filtered using the filtering parameter, the position information corresponding to the acquired uniform time sequence is closer to the actual position of the mobile robot, so that the position information of the mobile robot at any time can be effectively estimated, and the positioning accuracy of the mobile robot is improved.

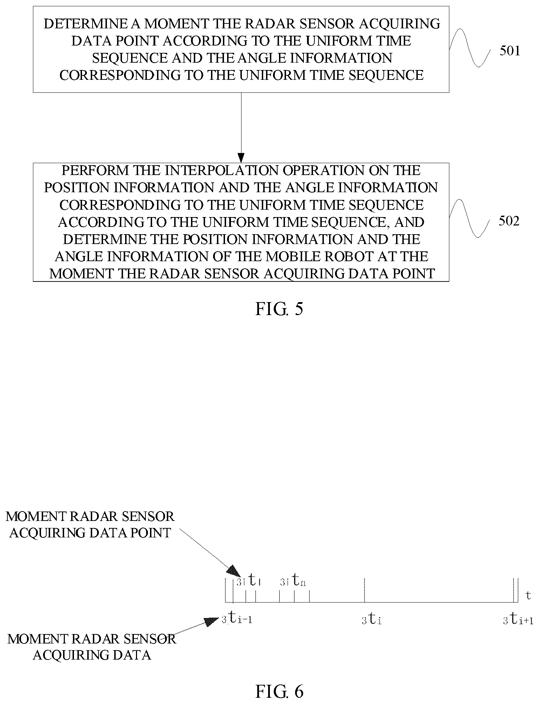

FIG. 5 is a flow diagram of a possible implementation of step 204 in the embodiment shown in FIG. 2. As shown in FIG. 5, step 204 determine the position information and the angle information of the mobile robot at the moment the radar sensor acquiring data point according to the position information and the angle information corresponding to the uniform time sequence includes:

Step 501: determine a moment the radar sensor acquiring data point according to the uniform time sequence and the angle information corresponding to the uniform time sequence.

FIG. 6 is a schematic diagram of a time sequence of the radar sensor acquiring data according to an embodiment of the disclosure. In FIG. 6, $_{3i}t_1$, $_{3i}t_2$, $_{3i}t_3$, $_{3i}t_n$ is the moment the radar sensor acquiring data point, $_3t_1$, $_3t_2$, $_3t_3$, ..., $_3t_n$ is the moment the radar senor acquiring radar data, and the moment acquiring radar data is a time point corresponding to each 360-degree rotation of the radar sensor. At this time, the radar sensor transmits a frame of data consisting of each radar data acquired when the radar sensor is rotated one circle (360 degrees), to a processor, which is a processor of a mobile robot, a terminal, or a server. Since data of the radar sensor and data of the position sensor are independently acquired, the robot cannot directly acquire a motion data corresponding to the moment the radar sensor acquiring data point $_{3i}t_1$, $_{3i}t_2$, $_{3i}t_3$,..., $_{3i}t_n$. The time interval at which the position sensor acquires the data may generally be 50ms. Since 50ms is very short, it may be considered that the change of the velocity and position of the robot within a time interval is uniform, and the rotation angle of the radar sensor corresponding to the time point of each frame of data acquired by the radar sensor is 360 degree, and it may be considered that a rotation velocity of radar sensor is constant. Therefore, the moment the radar sensor acquiring data point $_{3i}t_1$, $_{3i}t_2$, $_{3i}t_3$,..., $_{3i}t_n$ may be calculated using the uniform time sequence $_1t'_1$, $_1t'_2$, $_1t'_3$,..., $_1t'_n$ and an angle position corresponding to the uniform time sequence $_1t'_1$, $_1t'_2$, $_1t'_3$, ..., $_1t'_n$.

Step 502: perform the interpolation operation on the position information and the angle information corresponding to the uniform time sequence according to the uniform time sequence, and determine the position information and the angle information of the mobile robot at the moment the radar sensor acquiring data point.

In this embodiment, the position information and the angle information corresponding to the uniform time sequence $_1t'_1$, $_1t'_2$, $_1t'_3$,..., $_1t'_n$ can be interpolated according to the uniform time sequence $_1t_3$, $_1$, $_1t'_2$, $_1t'_3$,..., $_1t'_n$, and the position information and the angle of the mobile robot at the moment the radar sensor acquiring data point $_{3i}t_1$, $_{3i}t_2$, $_{3i}t_3$,..., $_{3i}t_n$ can be determined.

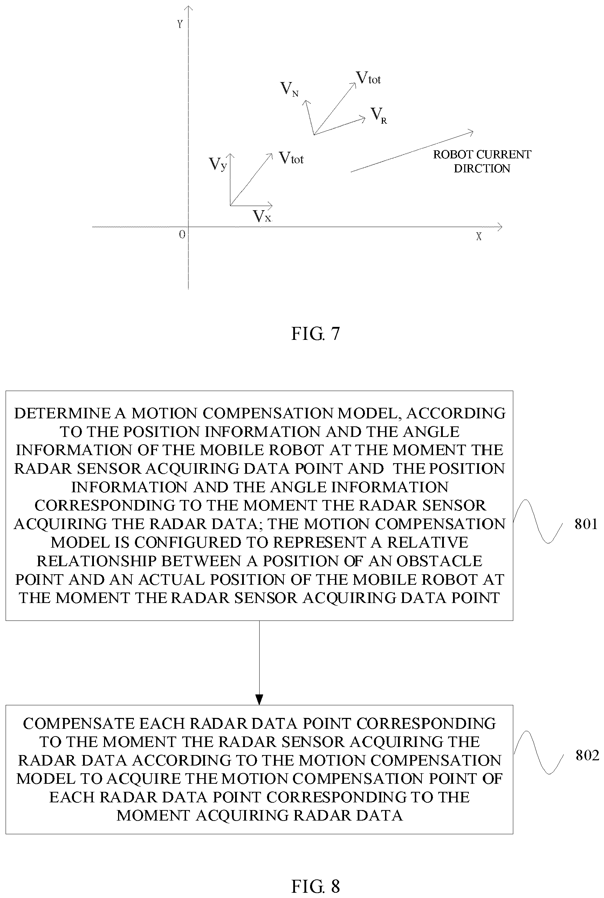

Optionally, a velocity of the mobile robot may be acquired according to the position information and the angle information corresponding to the uniform time sequence, as shown in FIG. 7, $V_R$ refers to a velocity component of a moving velocity of an object (the mobile robot) in an gazing direction of an observer, that is, a projection of the velocity vector in the gazing direction, and $V_N$ refers to the velocity component in the direction perpendicular to the $V_R$ of the object. $V_{tot}$ in FIG. 7 refers to a velocity (vector) of the robot, and FIG. 6 shows two pairs of velocity components in different directions, one pair of velocity components are velocity components in x and y direction of a coordinate system, and another pair of velocity components are velocity components in a radial direction and normal direction. The radial velocity $V_R$ and the normal velocity $V_N$ at each time point in the moment the radar sensor acquiring data point ${}_{3i}t_1, {}_{3i}t_2, {}_{3i}t3, ..., {}_{3i}t_n$ can be calculated from a component $V_x$ of a current velocity of the robot in x-axis direction and a component $V_y$ of a current velocity of the robot in y-axis direction and the angle information corresponding to the robot in the uniform time sequence ${}_1t'_1, {}_1t'_2, {}_1t'_3, ..., {}_1t'_n$.

FIG. 8 is a flowchart of a possible implementation of step 205 in the embodiment shown in FIG. 2. As shown in FIG. 8, step 205 compensate each radar data point acquired by the radar sensor according to the position information and the angle information of the mobile robot at the moment the radar sensor acquiring data point to acquire the motion compensation point of each radar data point corresponding to the moment acquiring radar data includes:

Step 801: determine a motion compensation model, according to the position information and the angle information of the mobile robot at the moment the radar sensor acquiring data point and the position information and the angle information corresponding to the moment the radar sensor acquiring the radar data; the motion compensation model is configured to represent a relative relationship between a position of an obstacle point and an actual position of the mobile robot at the moment the radar sensor acquiring data point.

In this embodiment, the radar data acquired by the radar sensor is not a position data and an angle data of the mobile robot, and the position information and the angle information corresponding to the moment the radar sensor acquiring the radar data can be acquired after certain operation and processing are necessarily performed on the radar data. For example, operation principle of the Lidar sensor is to transmit a detection signal (laser beam) to a target, and then receive a signal reflected from the target (target echo), and compare a signal reflected by the target with the transmitted signal. After proper processing, parameters such as distance, azimuth, height, velocity, attitude, and even shape of the target can be acquired.

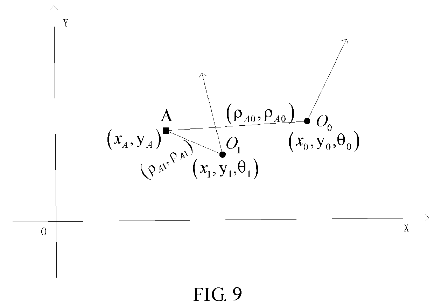

In this embodiment, as shown in FIG. 9, the position information and the angle information corresponding to the moment the radar sensor acquiring the radar data $3t_1$, $3t2$, $3t_3$,..., $3t_n$ is marked as $O_0$ point, the coordinate is $(x_0, y_0, \theta_0)$, and the position information and the angle information corresponding to each time point in moment the radar sensor acquiring data point ${}_{3i}t_1, {}_{3i}t_2, {}_{3i}t_3, ..., {}_{3i}t_n$ is marked as $O_1$ point, the coordinate is $(x_1, y_1, \theta_1)$. A is an obstacle point, and a coordinate of point A is $(x_A, y_A)$. After operation, a relative relationship between point A and point $O_1$ is acquired as polar coordinate $(\rho_{A1}, \rho_{A1})$, a relative relationship between point A and point $O_0$ is polar coordinate $(\rho_{A0}, \rho_{A0})$, and a motion compensation model is $(\rho_{A0}, \rho_{A0})$.

A calculation formula of each parameter is as follows:

$$x_A = x_1 + \rho_{A1} * \cos\left(\theta_1 + \theta_{A1}\right),$$

$$y_A = y_1 + \rho_{A1} * \sin\left(\theta_1 + \theta_{A1}\right),$$

$$\rho_{A0} = \sqrt{\left(x_0 - x_A\right)^2 + \left(y_0 - y_A\right)^2};$$

$$\theta_{A0} = a\tan\left(\frac{y_0 - y_A}{x_0 - x_A}\right) - \theta_0.$$

Step 802: compensate each radar data point corresponding to the moment the radar sensor acquiring the radar data according to the motion compensation model to acquire the motion compensation point of each radar data point corresponding to the moment acquiring radar data.

In this embodiment, the above-described motion compensation model is configured to compensate each radar data point corresponding to the moment the radar sensor acquiring the radar data to acquire the motion compensation point of each radar data point corresponding to the moment acquiring radar data, and then a data at each time point is rearranged into a data format of a radar data sensor as an input data of a subsequent program. For example, the compensated data is used as an input data of a positioning mapping model.

According to the method for radar data compensation of a mobile robot provided by this embodiment, a motion compensation model is determined according to the position information and the angle information of the mobile robot at the moment the radar sensor acquiring data point and the position information and the angle information corresponding to the moment the radar sensor acquiring the radar data. According to the motion compensation model, each radar data point corresponding to the moment the radar sensor acquiring the radar data is compensated to acquire a motion compensation point of each radar data point corresponding to the moment acquiring radar data. Since the motion compensation model is configured to represent a relative relationship between the position of the obstacle point and an actual position of the mobile robot at the moment the radar sensor acquiring data point, it is equivalent to determining the actual position of the robot according to the relative relationship between the obstacle point and the position of the mobile robot, which can effectively reduce influence of a movement of the robot itself on a radar data and improve robustness of working of a system and accuracy of positioning and mapping.

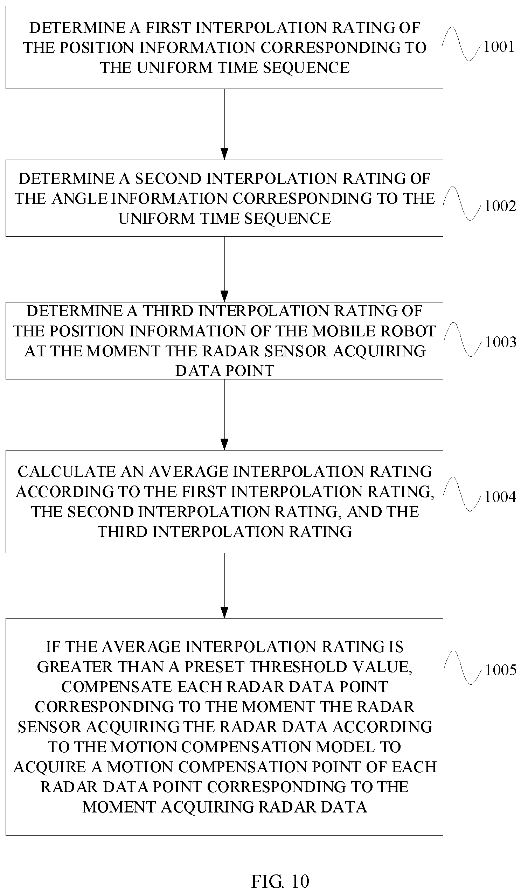

Optionally, on basis of the embodiment shown in FIG. 8, a result of each interpolation operation may be rated, and motion compensation may be performed when a rating is high. As shown in FIG. 10, step 802 compensate each radar data point corresponding to the moment the radar sensor acquiring the radar data according to the motion compensation model to acquire the motion compensation point of each radar data point corresponding to the moment acquiring radar data includes:

Step 1001: determine a first interpolation rating of the position information corresponding to the uniform time sequence.

In this embodiment, the first interpolation rating may include an interpolation rating for location information corresponding to each time point in the uniform time sequence $_1t'_1$ $_1t'_2$, $_1t'_3$,...,$_1t'_n$ and an interpolation rating for filtered location information. For example, the position information corresponding to each time point in each uniform time sequence $_1t'_1$, $1t'_2$, $_1t'_3$,..., $_1t'_3$, $_n$ may be rated, and the filtered position information is rated to acquire an average value of the two ratings as the first interpolation rating. Alternatively, the interpolation rating of the position information corresponding to each time point in the uniform time sequence $_1t'_1$, $_1t'_2$, $_1t'_3$,..., $_1t'_n$ may be directly taken as a first interpolation rating value.

The first interpolation rating value may include an interpolation rating of the position information corresponding to each time point in the uniform time sequence $_1t'_1$, $_1t'_2$, $_1t'_3$,..., $_1t'_n$,or may be an average of the interpolation ratings of the position information corresponding to all time points in the uniform time sequence $_1t_3$, $_1$, $_1t'_2$, $_1t'_3$,..., $_1t_n$.

Step 1002: determine a second interpolation rating of the angle information corresponding to the uniform time sequence.

In this embodiment, the angle information corresponding to each time point in each uniform time sequence $_1t'_1$, $_1t'_2$, $_1t'_3$,..., $_1t'_n$ may be rated to acquire a second interpolation rating.

The second interpolation rating may include an interpolation rating of the angle information corresponding to each time point in the uniform time sequence $_1t'_1$, $_1t'_2$, $_1t'_3$,..., $_1t'_n$, or may be an average value of the interpolation ratings of the angle information corresponding to all time points in the uniform time sequence $_1t'_1$, $_1t'_2$, $_1t'_3$,..., $_1t'_n$.

Step 1003: determine a third interpolation rating of the position information of the mobile robot at the moment the radar sensor acquiring data point.

In this embodiment, the position information corresponding to each time point in the moment the radar sensor acquiring data point $_{3i}t_1$, $_{3i}t_2$, $_{3i}t_3$,..., $_{3i}t_n$ may be rated to acquire a third interpolation rating.

The third interpolation rating may include an interpolation rating of the position information corresponding to each time point at the moment the radar sensor acquiring data point, or may be an average value of interpolation ratings of position information corresponding to all time points at the moment the radar sensor acquiring the data point $_{3i}t_1$, $_{3i}t_2$, $_{3i}t_3$,..., $_{3i}t_n$.

Step 1004: calculate an average interpolation rating according to the first interpolation rating, the second interpolation rating, and the third interpolation rating.

Step 1005: if the average interpolation rating is greater than a preset threshold value, compensate each radar data point corresponding to the moment the radar sensor acquiring the radar data according to the motion compensation model to acquire a motion compensation point of each radar data point corresponding to the moment acquiring radar data.

In this embodiment, since a plurality of linear interpolation operations are performed, the resulting data may have certain error, and therefore, each interpolation operation may be rated. An interpolation point closer to two end points has a higher interpolation rating, and an interpolation point away from two end points has a lower interpolation rating. Ratings of all interpolation operations are accumulated to acquire an average interpolation rating of a final motion compensation process. The higher an average interpolation rating, the greater the credibility of each interpolation operation, and the higher the accuracy of the acquired result, and a motion compensation is performed. If the average interpolation rating is too low, it indicates that an interpolation operation error is large, and the acquired result has a large error, which is not suitable for a motion compensation work.

According to the method for radar data compensation provided by the embodiment of the disclosure, it determines the first interpolation rating of the position information corresponding to the uniform time sequence, determines the second interpolation rating of the angle information corresponding to the uniform time sequence, determines the third interpolation rating of the position information of the mobile robot at the moment the radar sensor acquiring data point, and calculates the average interpolation rating according to the first interpolation rating, the second interpolation rating, and the third interpolation rating. If the average interpolation rating is greater than the preset threshold value, each radar data point corresponding to the moment the radar sensor acquiring the radar data is compensated according to the motion compensation model, so as to acquire the motion compensation point of each radar data point corresponding to the moment acquiring radar data. Since the higher the average interpolation rating, the greater the credibility of each interpolation operation, and the higher the accuracy of an acquired result. Therefore, a motion compensation is performed when the average interpolation rating is greater than a preset threshold value, which can improve accuracy of motion compensation, thereby improving robustness of work of a robot system.

It should be understood that although steps in flowcharts of FIGS. 2-10 are shown sequentially as indicated by an arrow, these steps are not necessarily performed sequentially as indicated by an arrow. Unless expressly stated herein, these steps are not performed in a strict order and may be performed in other orders. Also, at least a portion of the steps in FIGS. 2-10 may include a plurality of sub-steps or a plurality of stages, which are not necessarily performed at the same time, but may be performed at different times, and the sub-steps or stages are not necessarily performed sequentially, but may be performed in turn or alternately with at least a portion of a sub-step or a stage of other steps or other steps.

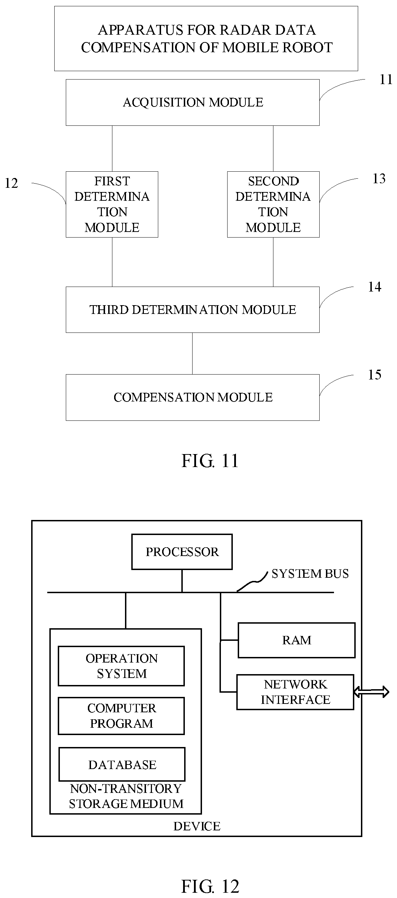

FIG. 11 is a block diagram of an apparatus for radar data compensation of a mobile robot provided by an embodiment of the disclosure. As shown in FIG. 11, the apparatus includes an acquisition module 11, a first determination module 12, a second determination module 13, a third determination module 14, and a compensation module 15.

The acquisition module 11 is configured to acquire a uniform time sequence, time intervals between any two adjacent time points of the uniform time sequence are equal;

The first determination module 12 is configured to determine position information corresponding to the uniform time sequence according to a time stamp of a position sensor acquiring data and position information acquired by the position sensor;

The second determination module 13 is configured to determine angle information corresponding to the uniform time sequence according to a time stamp of an angle sensor acquiring data and angle information acquired by the angle sensor;

The third determination module 14 is configured to determine position information and angle information of the mobile robot at a moment a radar sensor acquiring data point according to the position information and the angle information corresponding to the uniform time sequence;

The compensation module 15 is configured to compensate each radar data point corresponding to the moment the radar sensor acquiring the radar data according to the position information and the angle information of the mobile robot at the moment the radar sensor acquiring data point to acquire a motion compensation point of each radar data point corresponding to the moment acquiring radar data.

Optionally, the first determination module 12 is specifically configured to perform an interpolation operation on the position information acquired by the position sensor according to the time stamp of the position sensor acquiring data to acquire an interpolated position information; and filter the interpolated position information with a preset filtering parameter to acquire the position information corresponding to the uniform time sequence.

Optionally, the compensation module 15 is specifically configured to determine a motion compensation model according to the position information and the angle information of the mobile robot at the moment the radar sensor acquiring data point and the position information and the angle information corresponding to the moment the radar sensor acquiring the radar data; and compensate each radar data point corresponding to the moment the radar sensor acquiring the radar data according to the motion compensation model to acquire the motion compensation point of each radar data point corresponding to the moment acquiring the radar data; and the motion compensation model is configured to represent a relative relationship between a position of an obstacle point and an actual position of the mobile robot at the moment a radar sensor acquiring data point.

Optionally, the compensation module 15 compensates each radar data point corresponding to the moment the radar sensor acquiring the radar data according to the motion compensation model to acquire the motion compensation point of each radar data point corresponding to the moment acquiring the radar data includes: the compensation module determines a first interpolation rating of the position information corresponding to the uniform time sequence; determines a second interpolation rating of the angle information corresponding to the uniform time sequence; determines a third interpolation rating of position information of the mobile robot at the moment the radar sensor acquiring data point; calculates an average interpolation rating according to the first interpolation rating, the second interpolation rating, and the third interpolation rating; and if the average interpolation rating is greater than a preset threshold value, compensates each radar data point corresponding to the moment the radar sensor acquiring the radar data according to the motion compensation model to acquire the motion compensation point of each radar data point corresponding to the moment acquiring radar data.

Optionally, the third determination module 14 is specifically configured to determine the moment the radar sensor acquiring data point according to the uniform time sequence and the angle information corresponding to the uniform time sequence; perform the interpolation operation on the position information and the angle information corresponding to the uniform time sequence according to the uniform time sequence, and determine the position information and the angle information of the mobile robot at the moment the radar sensor acquiring data point.

Optionally, the acquisition module 11 is specifically configured to determine a sampling time interval according to a sampling frequency of the position sensor; and determine the uniform time sequence according to the sampling time interval and with a first time stamp of the position sensor acquiring data as a starting point.

For specific definition of the apparatus for radar data compensation of the mobile robot described above, reference may be made to the above definition of the method for radar data compensation, and details are omitted for brevity. Each modules in the data compensation apparatus may be implemented in whole or in part by software, hardware, and combinations thereof. The modules may be embedded in hardware or independent of the processor in the robot, the server, and the terminal shown in FIG. 1, or may be stored in software in the memory in the robot, the server, and the terminal shown in FIG. 1, so that the processor can invoke and execute the operations corresponding to each of the modules.

In an embodiment, a device is provided, which may be a robot, a server, or a terminal as shown in FIG. 1, an internal structure of which may be shown in FIG. 12. The device includes a processor, a memory, a network interface, and a database connected by a system bus. The processor of the device is configured to provide computing and control capability. The memory of the device includes a non-transitory storage medium and a Random Access Memory (RAM). The non-transitory storage medium stores an operating system, a computer program, and a database. The RAM provides an environment for operation of an operating system and a computer program in a non-transitory storage medium. The database of the device is configured to store various position data, angle data, time sequence, and the like. The network interface of the device is configured to communicate with external terminals by a network connection. The computer program is executed by the processor to implement the method for radar data compensation as described in any embodiment of FIGS. 2-10.

It will be appreciated by those skilled in the art that a structure shown in FIG. 12 is a block diagram of only a part of structure associated with a solution of the disclosure, and does not constitute a definition of the computer device to which the solution of the disclosure is applied, and that a particular computer device may include more or less components than those shown in the figures, or may combine certain components, or have a different component arrangement.

In an embodiment, a device is provided, which includes a memory and a processor, the memory stores a computer program which, when executed by the processor, causes the processor to perform the following steps:

acquiring a uniform time sequence, and time intervals between any two adjacent time points of the uniform time sequence being equal;

determining position information corresponding to the uniform time sequence according to a time stamp of a position sensor acquiring data and position information acquired by the position sensor;

determining angle information corresponding to the uniform time sequence according to a time stamp of an angle sensor acquiring data and angle information acquired by the angle sensor;

determining position information and angle information of the mobile robot at a moment a radar sensor acquiring data point according to the position information and the angle information corresponding to the uniform time sequence; and

compensating each radar data point acquired by the radar sensor according to the position information and the angle information of the mobile robot at the moment the radar sensor acquiring data point to acquire a motion compensation point of each radar data point corresponding to the moment acquiring the radar data.

In an embodiment, when the processor executes the computer program, the determining the position information corresponding to the uniform time sequence according to the time stamp of the position sensor acquiring data and the position information acquired by the position sensor: performing an interpolation operation on the position information acquired by the position sensor according to the time stamp of the position sensor acquiring data to acquire an interpolated position information; and filtering the interpolated position information with a preset filtering parameter to acquire the position information corresponding to the uniform time sequence.

In an embodiment, the processor executes the computer program, the compensating each radar data point acquired by the radar sensor according to the position information and the angle information of the mobile robot at the moment the radar sensor acquiring data point to acquire the motion compensation point of each radar data point corresponding to the moment acquiring radar data includes: determining a motion compensation model according to the position information and the angle information of the mobile robot at the moment the radar sensor acquiring data point and the position information and the angle information corresponding to the moment the radar sensor acquiring the radar data; the motion compensation model is configured to represent a relative relationship between a position of an obstacle point and an actual position of the mobile robot at the moment the radar sensor acquiring data point; and compensating each radar data point corresponding to the moment the radar sensor acquiring the radar data according to the motion compensation model to acquire the motion compensation point of each radar data point corresponding to the moment acquiring the radar data.

In an embodiment, when the processor executes the computer program, the compensating each radar data point corresponding to the moment the radar sensor acquiring the radar data according to the motion compensation model to acquire the motion compensation point of each radar data point corresponding to the moment acquiring radar data includes: determining a first interpolation rating of the position information corresponding to the uniform time sequence; determining a second interpolation rating of the angle information corresponding to the uniform time sequence; determining a third interpolation rating of the position information of the mobile robot at the moment the radar sensor acquiring data point; calculating an average interpolation rating according to the first interpolation rating, the second interpolation rating, and the third interpolation rating; and if the average interpolation rating is greater than a preset threshold value, compensates each radar data point corresponding to the moment the radar sensor acquiring the radar data according to the motion compensation model to acquire the motion compensation point of each radar data point corresponding to the moment acquiring the radar data.

In an embodiment, when the processor executes the computer program, the determining the position information and the angle information of the mobile robot at the moment the radar sensor acquiring data point according to the position information and the angle information corresponding to the uniform time sequence includes: determining the moment the radar sensor acquiring data point according to the uniform time sequence and the angle information corresponding to the uniform time sequence; and performing the interpolation operation on the position information and the angle information corresponding to the uniform time sequence according to the uniform time sequence, and determining the position information and the angle information of the mobile robot at the moment the radar sensor acquiring data point.

In an embodiment, when the processor execute the computer program, the acquiring the uniform time sequence includes: determining a sampling time interval according to a sampling frequency of the position sensor; and determining the uniform time sequence according to the sampling time interval and with a first time stamp of the position sensor acquiring data as a starting point.

In an embodiment, a computer-readable storage medium is provided, which has computer program stored thereon which, when executed by a processor, causes the processor to performs the following steps:

acquiring a uniform time sequence, and time intervals between any two adjacent time points of the uniform time sequence being equal;

determining position information corresponding to the uniform time sequence according to a time stamp of a position sensor acquiring data and position information acquired by the position sensor;

determining angle information corresponding to the uniform time sequence according to a time stamp of an angle sensor acquiring data and angle information acquired by the angle sensor;

determining position information and angle information of the mobile robot at a moment a radar sensor acquiring data point according to the position information and the angle information corresponding to the uniform time sequence; and

compensating each radar data point acquired by the radar sensor according to the position information and the angle information of the mobile robot at the moment the radar sensor acquiring data point to acquire a motion compensation point of each radar data point corresponding to the moment acquiring the radar data.

In an embodiment, when the processor executes the computer program, the determining the position information corresponding to the uniform time sequence according to the time stamp of the position sensor acquiring data and the position information acquired by the position sensor: performing an interpolation operation on the position information acquired by the position sensor according to the time stamp of the position sensor acquiring data to acquire an interpolated position information; and filtering the interpolated position information with a preset filtering parameter to acquire the position information corresponding to the uniform time sequence.

In an embodiment, the processor executes the computer program, the compensating each radar data point acquired by the radar sensor according to the position information and the angle information of the mobile robot at the moment the radar sensor acquiring data point to acquire the motion compensation point of each radar data point corresponding to the moment acquiring radar data includes: determining a motion compensation model according to the position information and the angle information of the mobile robot at the moment the radar sensor acquiring data point and the position information and the angle information corresponding to the moment the radar sensor acquiring the radar data; the motion compensation model is configured to represent a relative relationship between a position of an obstacle point and an actual position of the mobile robot at the moment the radar sensor acquiring data point; and compensating each radar data point corresponding to the moment the radar sensor acquiring the radar data according to the motion compensation model to acquire the motion compensation point of each radar data point corresponding to the moment acquiring the radar data.

In an embodiment, when the processor executes the computer program, the compensating each radar data point corresponding to the moment the radar sensor acquiring the radar data according to the motion compensation model to acquire the motion compensation point of each radar data point corresponding to the moment acquiring radar data includes: determining a first interpolation rating of the position information corresponding to the uniform time sequence; determining a second interpolation rating of the angle information corresponding to the uniform time sequence; determining a third interpolation rating of the position information of the mobile robot at the moment the radar sensor acquiring data point; calculating an average interpolation rating according to the first interpolation rating, the second interpolation rating, and the third interpolation rating; and if the average interpolation rating is greater than a preset threshold value, compensates each radar data point corresponding to the moment the radar sensor acquiring the radar data according to the motion compensation model to acquire the motion compensation point of each radar data point corresponding to the moment acquiring the radar data.

In an embodiment, when the processor executes the computer program, the determining the position information and the angle information of the mobile robot at the moment the radar sensor acquiring data point according to the position information and the angle information corresponding to the uniform time sequence includes: determining the moment the radar sensor acquiring data point according to the uniform time sequence and the angle information corresponding to the uniform time sequence; and performing the interpolation operation on the position information and the angle information corresponding to the uniform time sequence according to the uniform time sequence, and determining the position information and the angle information of the mobile robot at the moment the radar sensor acquiring data point.

In an embodiment, when the processor execute the computer program, the acquiring the uniform time sequence includes: determining a sampling time interval according to a sampling frequency of the position sensor; and determining the uniform time sequence according to the sampling time interval and with a first time stamp of the position sensor acquiring data as a starting point.

Persons of ordinary skill in the art understand that all or part of the processes in the methods of the foregoing embodiments may be implemented by a computer program instructing relevant hardware. The computer program may be stored in a non-transitory computer-readable storage medium. When the computer program is executed, flows of embodiments of the methods as described above may be included. Any references to memory, storage, databases, or other media used in the various embodiments provided herein may include non-transitory and/or transitory memory. The non-transitory memory may include a read only memory (ROM), a programmable ROM (PROM), an electrically programmable ROM (EPROM), an electrically erasable programmable ROM (EEPROM), or a flash memory. The transitory memory may include a random access memory (RAM) or an external cache memory. By way of illustration and not limitation, RAM is available in a variety of forms such as static RAM (SRAM), dynamic RAM (DRAM), synchronous DRAM (SDRAM), double data rate SDRAM (DDRSDRAM), enhanced SDRAM (ESDRAM), Synchlink DRAM (SLDRAM), Memory Bus (Rambus) Direct RAM (RDRAM), Direct Memory Bus Dynamic RAM (DRDRAM), Memory Bus Dynamic RAM (RDRAM) etc.

The foregoing respective technical features involved in the respective embodiments can be combined arbitrarily, for brevity, not all possible combinations of the respective technical features in the foregoing embodiments are described, however, to the extent they have no collision with each other, the combination of the respective technical features shall be considered to be within the scope of the description.

The foregoing embodiments only express several implementations of this disclosure, and their descriptions are more specific and detailed, but they should not be interpreted as a limitation on the scope of this disclosure. It should be noted that any modification or improvement readily figured out by persons skilled in the art within the technical scope disclosed in the disclosure shall all fall into the protection scope of the disclosure. Therefore, the protection scope of the disclosure shall be subject to the protection scope of the claims.

**Claims**

1. A method for radar data compensation of a mobile robot, the method comprising:

   acquiring a uniform time sequence, and time intervals between any two adjacent time points of the uniform time sequence being equal;
   determining position information corresponding to the uniform time sequence according to a time stamp of a position sensor acquiring data and position information acquired by the position sensor;
   determining angle information corresponding to the uniform time sequence according to a time stamp of an angle sensor acquiring data and angle information acquired by the angle sensor;
   determining position information and angle information of the mobile robot at a moment a radar sensor acquiring data point according to the position information and the angle information corresponding to the uniform time sequence; and

compensating each radar data point acquired by the radar sensor according to the position information and the angle information of the mobile robot at the moment the radar sensor acquiring data point to acquire a motion compensation point of each radar data point corresponding to the moment acquiring the radar data.

2. The method according to claim 1, wherein the determining the position information corresponding to the uniform time sequence according to the time stamp of the position sensor acquiring data and the position information acquired by the position sensor comprises:

performing an interpolation operation on the position information acquired by the position sensor according to the time stamp of the position sensor acquiring data to acquire an interpolated position information; and filtering the interpolated position information with a preset filtering parameter to acquire the position information corresponding to the uniform time sequence.

3. The method according to claim 1 or 2, wherein the compensating each radar data point acquired by the radar sensor according to the position information and the angle information of the mobile robot at the moment the radar sensor acquiring data point to acquire the motion compensation point of each radar data point corresponding to the moment acquiring radar data comprises:

determining a motion compensation model according to the position information and the angle information of the mobile robot at the moment the radar sensor acquiring data point and the position information and the angle information corresponding to the moment the radar sensor acquiring the radar data; wherein the motion compensation model is configured to represent a relative relationship between a position of an obstacle point and an actual position of the mobile robot at the moment the radar sensor acquiring data point; and compensating each radar data point corresponding to the moment the radar sensor acquiring the radar data according to the motion compensation model to acquire the motion compensation point of each radar data point corresponding to the moment acquiring the radar data.

4. The method according to claim 3, wherein the compensating each radar data point corresponding to the moment the radar sensor acquiring the radar data according to the motion compensation model to acquire the motion compensation point of each radar data point corresponding to the moment acquiring radar data comprises:

determining a first interpolation rating of the position information corresponding to the uniform time sequence; determining a second interpolation rating of the angle information corresponding to the uniform time sequence; determining a third interpolation rating of the position information of the mobile robot at the moment the radar sensor acquiring data point; calculating an average interpolation rating according to the first interpolation rating, the second interpolation rating, and the third interpolation rating; and if the average interpolation rating is greater than a preset threshold value, compensates each radar data point corresponding to the moment the radar sensor acquiring the radar data according to the motion compensation model to acquire the motion compensation point of each radar data point corresponding to the moment acquiring the radar data.

5. The method according to claim 1 or 2, wherein the determining the position information and the angle information of the mobile robot at the moment the radar sensor acquiring data point according to the position information and the angle information corresponding to the uniform time sequence comprises:

determining the moment the radar sensor acquiring data point according to the uniform time sequence and the angle information corresponding to the uniform time sequence; and performing the interpolation operation on the position information and the angle information corresponding to the uniform time sequence according to the uniform time sequence, and determining the position information and the angle of the mobile robot at the moment the radar sensor acquiring data point.

6. The method according to claim 1 or 2, wherein the acquiring the uniform time sequence comprises:

determining a sampling time interval according to a sampling frequency of the position sensor; and determining the uniform time sequence according to the sampling time interval and with a first time stamp of the position sensor acquiring data as a starting point.

7. An apparatus for radar data compensation of a mobile robot, comprising:

an acquisition module, configured to acquire a uniform time sequence, and time intervals between any two adjacent time points of the uniform time sequence being equal;
a first determination module, configured to determine position information corresponding to the uniform time sequence according to a time stamp of a position sensor acquiring data and position information acquired by the position sensor;
a second determination module, configured to determine angle information corresponding to the uniform time sequence according to a time stamp of an angle sensor acquiring data and angle information acquired by the angle sensor;
a third determination module, configured to determine position information and angle information of the mobile robot at a moment a radar sensor acquiring data point according to the position information and the angle information corresponding to the uniform time sequence;
a compensation module, configured to compensate each radar data point corresponding to the moment the radar sensor acquiring the radar data according to the position information and the angle information of the mobile robot at the moment the radar sensor acquiring data point to acquire a motion compensation point of each radar data point corresponding to the moment acquiring radar data.

8. The apparatus according to claim 7, wherein the first determination module is specifically configured to perform an interpolation operation on the position information acquired by the position sensor according to the time stamp of the position sensor acquiring data to acquire an interpolated position information; and filter the interpolated position information with a preset filtering parameter to acquire the position information corresponding to the uniform time sequence.

9. The apparatus according to claim 7 or 8, wherein the compensation module is specifically configured to determine a motion compensation model according to the position information and the angle information of the mobile robot at the moment the radar sensor acquiring data point and the position information and the angle information corresponding to the moment the radar sensor acquiring the radar data; and
compensate each radar data point corresponding to the moment the radar sensor acquiring the radar data according to the motion compensation model to acquire the motion compensation point of each radar data point corresponding to the moment acquiring the radar data; and the motion compensation model is configured to represent a relative relationship between a position of an obstacle point and an actual position of the mobile robot at the moment a radar sensor acquiring data point.

10. The apparatus according to claim 9, wherein the compensation module compensates each radar data point corresponding to the moment the radar sensor acquiring the radar data according to the motion compensation model to acquire the motion compensation point of each radar data point corresponding to the moment acquiring the radar data comprises:
the compensation module determines a first interpolation rating of the position information corresponding to the uniform time sequence; determines a second interpolation rating of the angle information corresponding to the uniform time sequence; determines a third interpolation rating of position information of the mobile robot at the moment the radar sensor acquiring data point; calculates an average interpolation rating according to the first interpolation rating, the second interpolation rating, and the third interpolation rating; and if the average interpolation rating is greater than a preset threshold value, compensates each radar data point corresponding to the moment the radar sensor acquiring the radar data according to the motion compensation model to acquire the motion compensation point of each radar data point corresponding to the moment acquiring radar data.

11. The apparatus according to claim 7 or 8, wherein the third determination module is specifically configured to determine the moment the radar sensor acquiring data point according to the uniform time sequence and the angle information corresponding to the uniform time sequence; perform the interpolation operation on the position information and the angle information corresponding to the uniform time sequence according to the uniform time sequence, and determine the position information and the angle information of the mobile robot at the moment the radar sensor acquiring data point.

12. The apparatus according to claim 7 or 8, wherein the acquisition module is specifically configured to determine a sampling time interval according to a sampling frequency of the position sensor; and determine the uniform time sequence according to the sampling time interval and with a first time stamp of the position sensor acquiring data as a starting point.

13. A device comprising a memory and a processor, the memory having a computer program stored thereon which, when executed by the processor, causing the processor to perform the steps of the method of any one of claims 1 to 6.

14. A computer-readable storage medium having a computer program stored thereon which, when executed by a processor, causing the processor to perform the steps of the method of any one of claims 1 to 6.

FIG. 1

ACQUIRE A UNIFORM TIME SEQUENCE, AND TIME INTERVALS BETWEEN ANY TWO ADJACENT TIME POINTS OF THE UNIFORM TIME SEQUENCE ARE EQUAL — 201

DETERMINE POSITION INFORMATION CORRESPONDING TO THE UNIFORM TIME SEQUENCE ACCORDING TO A TIME STAMP OF A POSITION SENSOR ACQUIRING DATA AND POSITION INFORMATION ACQUIRED BY THE POSITION SENSOR — 202

DETERMINE ANGLE INFORMATION CORRESPONDING TO THE UNIFORM TIME SEQUENCE ACCORDING TO A TIME STAMP OF AN ANGLE SENSOR ACQUIRING DATA AND ANGLE INFORMATION ACQUIRED BY THE ANGLE SENSOR — 203

DETERMINE POSITION INFORMATION AND ANGLE INFORMATION OF THE MOBILE ROBOT AT A MOMENT A RADAR SENSOR ACQUIRING DATA POINT ACCORDING TO POSITION INFORMATION AND ANGLE INFORMATION CORRESPONDING TO THE UNIFORM TIME SEQUENCE — 204

COMPENSATE EACH RADAR DATA POINT ACQUIRED BY THE RADAR SENSOR ACCORDING TO THE POSITION INFORMATION AND THE ANGLE INFORMATION OF THE MOBILE ROBOT AT THE MOMENT THE RADAR SENSOR ACQUIRING DATA POINT TO ACQUIRE A MOTION COMPENSATION POINT OF EACH RADAR DATA POINT CORRESPONDING TO THE MOMENT ACQUIRING THE RADAR DATA — 205

FIG. 2

TIME STAMP OF POSITION
SENSOR ACQUIRING LOCATION
INFORMATION

$_1t_1$ $_1t_2$ $_1t_3$ $_1t_4$ $_1t_5$ $_1t_6$

TIME STAMP OF ANGLE
SENSOR ACQUIRING ANGLE
INFORMATION

$_2t_1$ $_2t_2$ $_2t_3$ $_2t_4$ $_2t_5$ $_2t_6$

RADAR SENSOR ACQUIRING
RADAR DATA TIMING

$_3t_1$ $_3t_2$ $_3t_3$

UNIFORM TIME SEQUENCE

$_1t_1'$ $_1t_2'$ $_1t_3'$ $_1t_4'$ $_1t_5'$ $_1t_6'$ $_1t_7'$

FIG. 3

PERFORM AN INTERPOLATION OPERATION ON THE
POSITION INFORMATION ACQUIRED BY THE POSITION
SENSOR ACCORDING TO THE TIME STAMP OF THE POSITION
SENSOR ACQUIRING DATA TO ACQUIRE AN INTERPOLATED
POSITION INFORMATION

401

FILTER THE INTERPOLATED POSITION INFORMATION WITH
A PRESET FILTERING PARAMETER TO ACQUIRE THE
POSITION INFORMATION CORRESPONDING TO THE
UNIFORM TIME SEQUENCE

402

FIG. 4

DETERMINE A MOMENT THE RADAR SENSOR ACQUIRING
DATA POINT ACCORDING TO THE UNIFORM TIME
SEQUENCE AND THE ANGLE INFORMATION
CORRESPONDING TO THE UNIFORM TIME SEQUENCE

501

PERFORM THE INTERPOLATION OPERATION ON THE
POSITION INFORMATION AND THE ANGLE INFORMATION
CORRESPONDING TO THE UNIFORM TIME SEQUENCE
ACCORDING TO THE UNIFORM TIME SEQUENCE, AND
DETERMINE THE POSITION INFORMATION AND THE
ANGLE INFORMATION OF THE MOBILE ROBOT AT THE
MOMENT THE RADAR SENSOR ACQUIRING DATA POINT

502

FIG. 5

MOMENT RADAR SENSOR
ACQUIRING DATA POINT

$_{3i}t_1$    $_{3i}t_n$

t

$_3t_{i-1}$          $_3t_i$          $_3t_{i+1}$

MOMENT RADAR SENSOR
ACQUIRING DATA

FIG. 6

FIG. 7

DETERMINE A MOTION COMPENSATION MODEL, ACCORDING TO THE POSITION INFORMATION AND THE ANGLE INFORMATION OF THE MOBILE ROBOT AT THE MOMENT THE RADAR SENSOR ACQUIRING DATA POINT AND THE POSITION INFORMATION AND THE ANGLE INFORMATION CORRESPONDING TO THE MOMENT THE RADAR SENSOR ACQUIRING THE RADAR DATA; THE MOTION COMPENSATION MODEL IS CONFIGURED TO REPRESENT A RELATIVE RELATIONSHIP BETWEEN A POSITION OF AN OBSTACLE POINT AND AN ACTUAL POSITION OF THE MOBILE ROBOT AT THE MOMENT THE RADAR SENSOR ACQUIRING DATA POINT

801

COMPENSATE EACH RADAR DATA POINT CORRESPONDING TO THE MOMENT THE RADAR SENSOR ACQUIRING THE RADAR DATA ACCORDING TO THE MOTION COMPENSATION MODEL TO ACQUIRE THE MOTION COMPENSATION POINT OF EACH RADAR DATA POINT CORRESPONDING TO THE MOMENT ACQUIRING RADAR DATA

802

FIG. 8

FIG. 9

DETERMINE A FIRST INTERPOLATION RATING OF THE POSITION INFORMATION CORRESPONDING TO THE UNIFORM TIME SEQUENCE ⟩1001

DETERMINE A SECOND INTERPOLATION RATING OF THE ANGLE INFORMATION CORRESPONDING TO THE UNIFORM TIME SEQUENCE ⟩1002

DETERMINE A THIRD INTERPOLATION RATING OF THE POSITION INFORMATION OF THE MOBILE ROBOT AT THE MOMENT THE RADAR SENSOR ACQUIRING DATA POINT ⟩1003

CALCULATE AN AVERAGE INTERPOLATION RATING ACCORDING TO THE FIRST INTERPOLATION RATING, THE SECOND INTERPOLATION RATING, AND THE THIRD INTERPOLATION RATING ⟩1004

IF THE AVERAGE INTERPOLATION RATING IS GREATER THAN A PRESET THRESHOLD VALUE, COMPENSATE EACH RADAR DATA POINT CORRESPONDING TO THE MOMENT THE RADAR SENSOR ACQUIRING THE RADAR DATA ACCORDING TO THE MOTION COMPENSATION MODEL TO ACQUIRE A MOTION COMPENSATION POINT OF EACH RADAR DATA POINT CORRESPONDING TO THE MOMENT ACQUIRING RADAR DATA ⟩1005

FIG. 10

APPARATUS FOR RADAR DATA COMPENSATION OF MOBILE ROBOT

ACQUISITION MODULE — 11

FIRST DETERMINA TION MODULE — 12

SECOND DETERMINA TION MODULE — 13

THIRD DETERMINATION MODULE — 14

COMPENSATION MODULE — 15

FIG. 11

PROCESSOR

SYSTEM BUS

OPERATION SYSTEM

COMPUTER PROGRAM

DATABASE

NON-TRANSITORY STORAGE MEDIUM

RAM

NETWORK INTERFACE

DEVICE

FIG. 12

## INTERNATIONAL SEARCH REPORT

| | International application No. |
|---|---|
| | **PCT/CN2019/077020** |

| A. | CLASSIFICATION OF SUBJECT MATTER |
|---|---|

G01S 17/06(2006.01)i

According to International Patent Classification (IPC) or to both national classification and IPC

| B. | FIELDS SEARCHED |
|---|---|

Minimum documentation searched (classification system followed by classification symbols)

G01S(2006.01)

Documentation searched other than minimum documentation to the extent that such documents are included in the fields searched

Electronic data base consulted during the international search (name of data base and, where practicable, search terms used)

CNABS, CNTXT, CNKI, DWPI, SIPOABS, VEN, 广东宝乐机器人股份有限公司, 王行知, 丁璜, 王立磊, 杨锴, 郑卓斌, 雷达, 位置, 角度, 时间, 时刻, 间隔, 相同, 等, 序列, 时间戳, 运动, 补偿, 校正, radar, time, series, position, angle, compensation

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 108957466 A (GUANGDONG BONA ROBOT CORPORATION LIMITED) 07 December 2018 (2018-12-07)<br>  claims 1-14, description, paragraphs [0001]-[0176], and figures 1-12 | 1-14 |
| Y | CN 103323840 A (INSTITUTE OF ELECTRONICS, CHINESE ACADEMY OF SCIENCES) 25 September 2013 (2013-09-25)<br>  description, paragraph [0008] | 1-14 |
| Y | CN 101067656 A (BEIHANG UNIVERSITY) 07 November 2007 (2007-11-07)<br>  claims 1 and 2 | 1-14 |
| A | CN 103777201 A (207 RESEARCH OFFICE INSTITUTE OF NO. 2 RESEARCH INSTITUTE OF CHINA AEROSPACE SCIENCE AND INDUSTRY CORP.) 07 May 2014 (2014-05-07)<br>  entire document | 1-14 |
| A | CN 103823209 A (INSTITUTE OF ELECTRONICS, CHINESE ACADEMY OF SCIENCES) 28 May 2014 (2014-05-28)<br>  entire document | 1-14 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **05 June 2019** | **12 June 2019** |

| Name and mailing address of the ISA/CN | Authorized officer |
|---|---|
| **State Intellectual Property Office of the P. R. China**<br>**No. 6, Xitucheng Road, Jimenqiao Haidian District, Beijing**<br>**100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2019/077020**

| Patent document cited in search report | | | Publication date (day/month/year) | Patent family member(s) | | | Publication date (day/month/year) |
|---|---|---|---|---|---|---|---|
| CN | 108957466 | A | 07 December 2018 | None | | | |
| CN | 103323840 | A | 25 September 2013 | CN | 103323840 | B | 11 February 2015 |
| CN | 101067656 | A | 07 November 2007 | CN | 100487481 | C | 13 May 2009 |
| CN | 103777201 | A | 07 May 2014 | None | | | |
| CN | 103823209 | A | 28 May 2014 | CN | 103823209 | B | 13 April 2016 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2018103468721